# EUROPEAN PATENT APPLICATION

(11) **EP 2 927 562 A1**
(43) Date of publication of application: **07.10.2015**
(21) Application number: 15161707.3
(22) Date of filing: 30.03.2015
(51) Int. Cl.: F21K 99/00, F21V 29/83

(54) **LAMP**

(30) Priority: 31.03.2014 TW 103111977
(71) Applicant: Radiant Opto-Electronics Corporation, Kaohsiung City 806 (TW)
(72) Inventor: Huang, Guo-Hao, 806 Kaohsiung City (TW); Liu, Shang-Chia, 806 Kaohsiung City (TW); Chen, Kun-Feng, 806 Kaohsiung City (TW); Wang, Pen-Jan, 806 Kaohsiung City (TW)
(74) Representative: Merryweather, Colin Henry

(57) **Abstract**

A lamp includes a heat-dissipating unit (3), a light source (4) and a light guide unit (5). The heat-dissipating unit (3) is formed with at least one heat-dissipating channel (311) that has opposite open ends. The light source (4) is disposed on the heat-dissipating unit (3). The light guide unit (5) is disposed in front of the light source (4) for guiding light that is emitted from the light source (4), and is formed with a vent hole (511) that has opposite open ends in spatial communication with the heat-dissipating channel (311).

## Description

The invention relates to a lamp, more particularly to a lamp with ventilation function.

A light-emitting diode (LED) is often used in lighting due to its long lifespan and shock-resistant characteristics. However, light-emission efficiency of the LED is affected by increase in temperature. Heat-dissipation, therefore, becomes a primary concern in LED lighting.

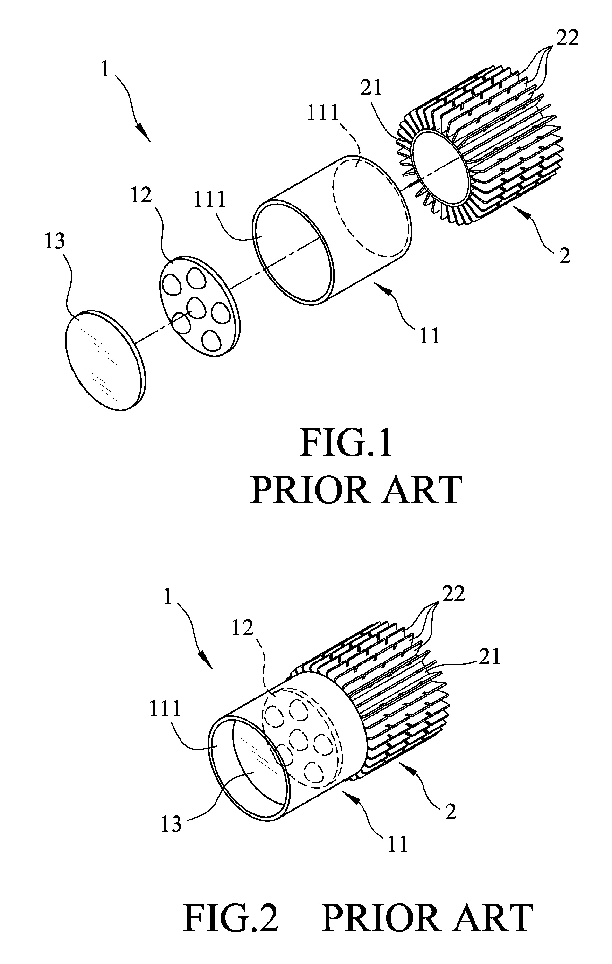

Referring to Figs. 1 and 2, a conventional LED lamp includes a lighting unit 1 and a heat-dissipating unit 2 attached behind the lighting unit 1. The lighting unit 1 includes a hollow body 11 that defines a channel with opposite open ends 111, a lighting module 12 that is disposed in the body 11, and an optic component 13 that is disposed in the body 11 and that is in front of the lighting module 12. The heat-dissipating unit 2 includes a main body 21, and a plurality of spaced-apart heat-dissipating fins 22 that extend outwardly and radially from the main body 21. The heat-dissipating unit 2 is in contact with the lighting module 12 for dissipating heat generated by the lighting module 12.

The optic component 13 and the heat-dissipating unit 2 block respectively the opposite open ends 111 of the channel of the body 11 of the lighting unit 1, thereby preventing air from the external environment from flowing into the body 11 which would otherwise help heat dissipation. The heat-dissipating unit 2 is hence the only means of heat dissipation, and will need to be made larger if better heat-dissipating efficiency is desired. However, this is accompanied by the disadvantage of an increase in the overall size and weight of the conventional LED lamp.

Therefore, the object of the present invention is to provide a lamp with ventilation function that can alleviate the aforesaid drawbacks of the prior art.

Accordingly, a lamp includes a heat-dissipating unit, a light source and a light guide unit. The heat-dissipating unit is formed with at least one heat-dissipating channel that has opposite open ends. The light source is disposed on the heat-dissipating unit. The light guide unit is disposed in front of the light source for guiding light that is emitted from the light source, and is formed with a vent hole that has opposite open ends in spatial communication with the heat-dissipating channel.

Other features and advantages of the present invention will become apparent in the following detailed description of the embodiments with reference to the accompanying drawings, of which:
Fig. 1 is an exploded perspective view of a conventional LED lamp;
Fig. 2 is an assembled perspective view of the conventional LED lamp;
Fig. 3 is an exploded perspective view of a first embodiment of a lamp according to the present invention;
Fig. 4 is an exploded perspective view of a modification of the first embodiment;
Fig. 5 is an exploded perspective view of the first embodiment mounted to a support surface;
Figs. 6 (a) to 6 (c) are schematic sectional views used to illustrate the superior heat-dissipating efficiency of the heat-dissipating channel of the first embodiment in comparison with other configurations;
Figs. 7 (a) to 7(e) are schematic side views of the first embodiment with different orientations;
Figs. 8(a) and 8(b) are schematic sectional views used to illustrate the compact size of the first embodiment in comparison with another configuration; and
Fig. 9 is an exploded perspective view of a second embodiment of the lamp according to the present invention.

Before the present invention is described in greater detail, it should be noted that like elements are denoted by the same reference numerals throughout the disclosure.

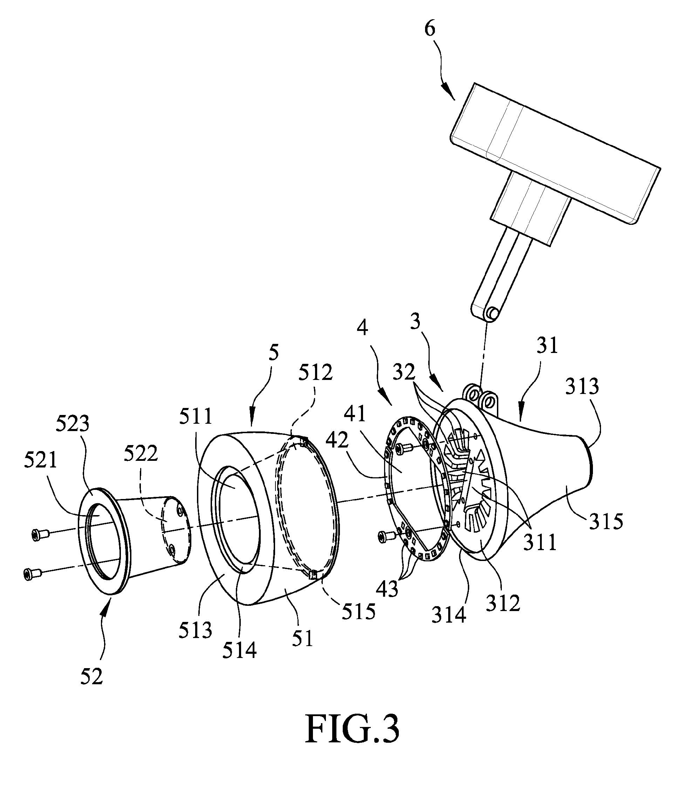

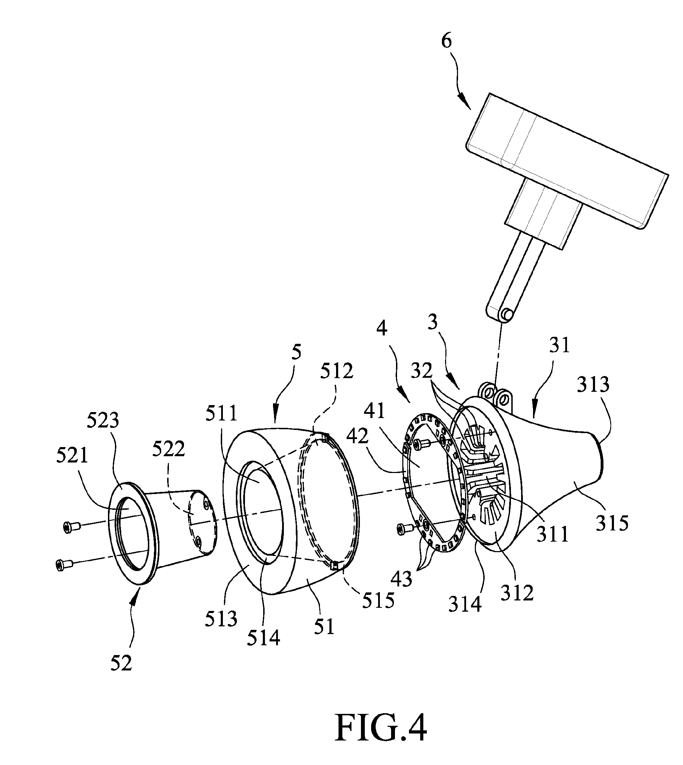

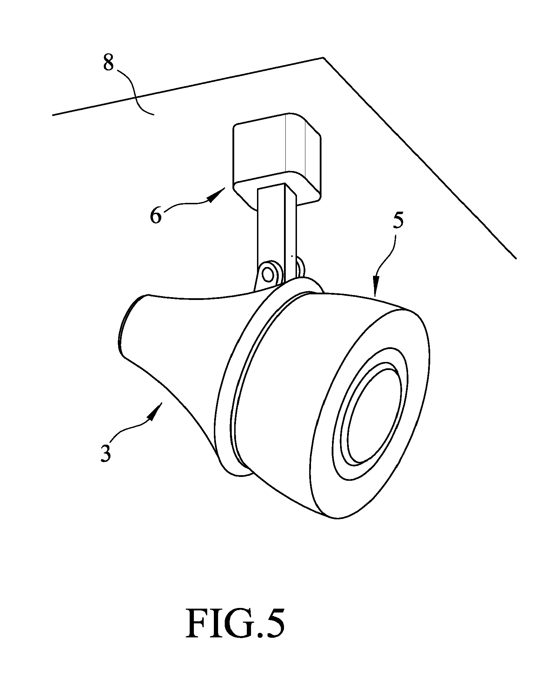

Referring to Figure 3, the first embodiment of a lamp according to the present invention includes a heat-dissipating unit 3, a light source 4 disposed on the heat-dissipating unit 3, a light guide unit 5 disposed in front of the light source 4 for guiding light that is emitted from the light source 4, and a mounting seat 6 connected to the heat-dissipating unit 3. The heat-dissipating unit 3 includes a heat-dissipating seat 31 and a plurality of spaced-apart heat-dissipating components 32. The heat-dissipating seat 31 includes a main body 315 that has opposite front and rear end surfaces 312, 313, and two heat-dissipating channels 311. Each of the heat-dissipating channels 311 has opposite open ends. The open ends of each of the heat-dissipating channels 311 are formed respectively in the front and rear end surfaces 312, 313. The heat-dissipating components 32 are connected to the heat-dissipating seat 31 and disposed in the heat dissipating channels 311. The heat-dissipating seat 31 further includes a second engaging portion 314 that projects from the front end surface 312 of the main body 315 and that surrounds the open ends of the heat-dissipating channels 311 formed in the front end surface 312. It shouldbe noted that the heat-dissipating seat 31 in other embodiments may be formed with only one heat-dissipating channel 311 that tapers rearwardly, as shown in Figs. 4 and 5(a).

The light source 4 includes an annular circuit board 42 that is coupled to the front end surface 312 of the heat-dissipating seat 31, that is surrounded by the second engaging portion 314 of the heat-dissipating seat 31, and that defines a through hole 41 therein, and a plurality light emitting members 43 that are connected to the annular circuit board 42. The through hole 41 is in spatial communication with the heat-dissipating channels 311. In this embodiment, the light emitting members 43 are LEDs. In other embodiments of this invention, the type of the light emitting members 43 is not limited to the disclosure herein.

The light guide unit 5 includes a lens 51 that has a light incident surface 512 facing the heat-dissipating seat 31, and a light emitting surface 513 opposite to and larger than the light incident surface 512. The lens 51 is formed with a vent hole 511 that has opposite open ends formed respectively in the light incident surface 512 and the light emitting surface 513, and in spatial communication with the through hole 41. The light incident surface 512 is further formed with a first engaging portion 515 surrounding the vent hole 511 and engaged with the second engaging portion 314 of the heat-dissipating seat 31, in detail, said second engaging portion 314 is an annular projection wall and said first engaging portion 515 abuts against the inner side of said annular projection wall to be retained by said annular projection wall. The light emitting surface 513 is further formed with a receiving groove 514 surrounding one of the open ends of the vent hole 511 which is formed in the light emitting surface 513. The light emitted from the light source 4 enters the lens 51 through the light incident surface 512 and is reflected to exit the lens 51 through the light emitting surface 513. The light guide unit 5 further includes an annular fixing member 52 that extends into the vent hole 511 and that is fixed to the heat-dissipating seat 31 so as to position the lens 51. Specifically, the annular fixing member 52 has a heat-dissipating hole 521 that has opposite open ends and that is in spatial communication with the heat-dissipating channels 311, a rear end section 522 that is connected to the front end surface 312 of the heat-dissipating seat 31 and formed with one of the open ends of the heat-dissipating hole 521, and a front end section 523 that is retained in the receiving groove 514 and formed with the other one of the open ends of the heat-dissipating hole 521. In this embodiment, the heat-dissipating hole 521 tapers rearwardly. As shown in Fig. 5, the mounting seat 6 is adapted for mounting the lamp to a support surface 8 such as a wall or a ceiling.

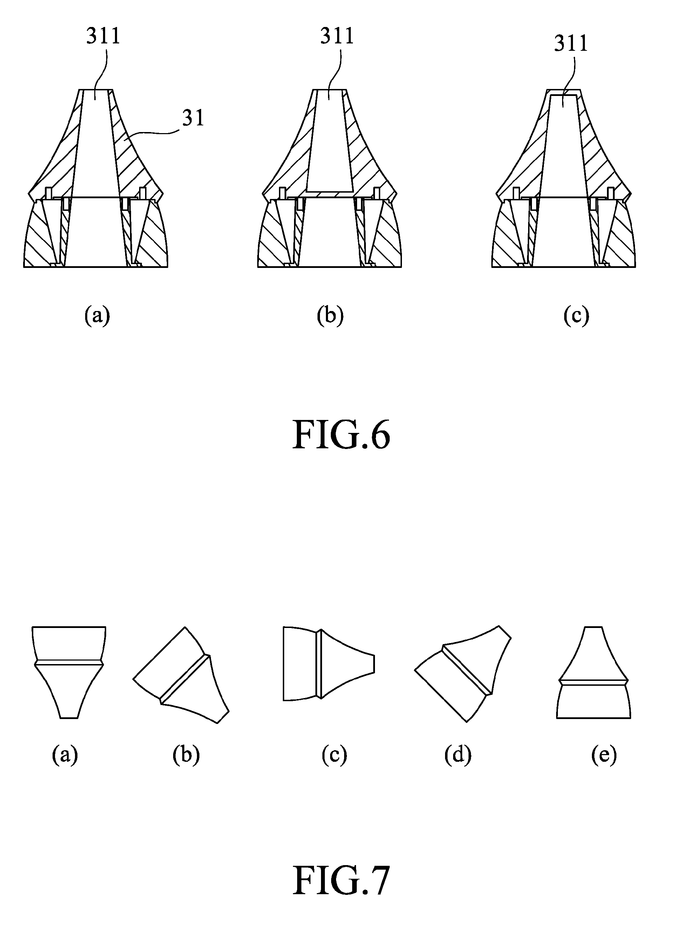

Figs. 6(b) and 6(c) illustrate different configurations of the heat-dissipating channel 311 that has a closed front end and a closed rear end, respectively. The lamp having the heat dissipating channel 311 with opposite open ends in Fig. 6 (a) allows the light emitting members 43 and the heat-dissipating seat 31 to maintain a lower temperature than those associated with the close-ended heat-dissipating channels 311 illustrated in Figs. 6(b) and 6(c) by virtue of air circulation. It should be noted that, among different orientations shown in Fig. 7(a) to 7(e), the lamp derives optimal heat-dissipating efficiency when facing downwardly as shown in Fig. 7(e) due to stack effect.

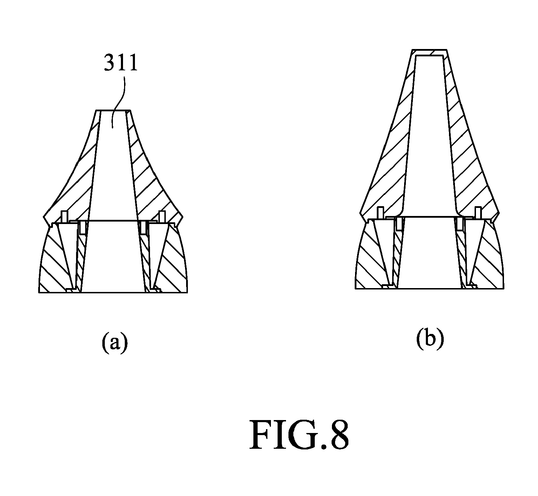

Figs. 8 (a) and 8 (b) respectively illustrate the first embodiment having the heat-dissipating channel 311 with the opposite open ends and an LED lamp having a heat-dissipating channel with a closed rear end, both having the same heat-dissipating efficiency. As shown in Fig. 8(b), the heat-dissipating channel with a closed rear end has a relatively weak air circulation ability so that a larger area exposed to the surroundings is required for heat dissipation. It is obvious that the heat-dissipating channel 311 with the opposite open ends results in a light-weight and compact lamp.

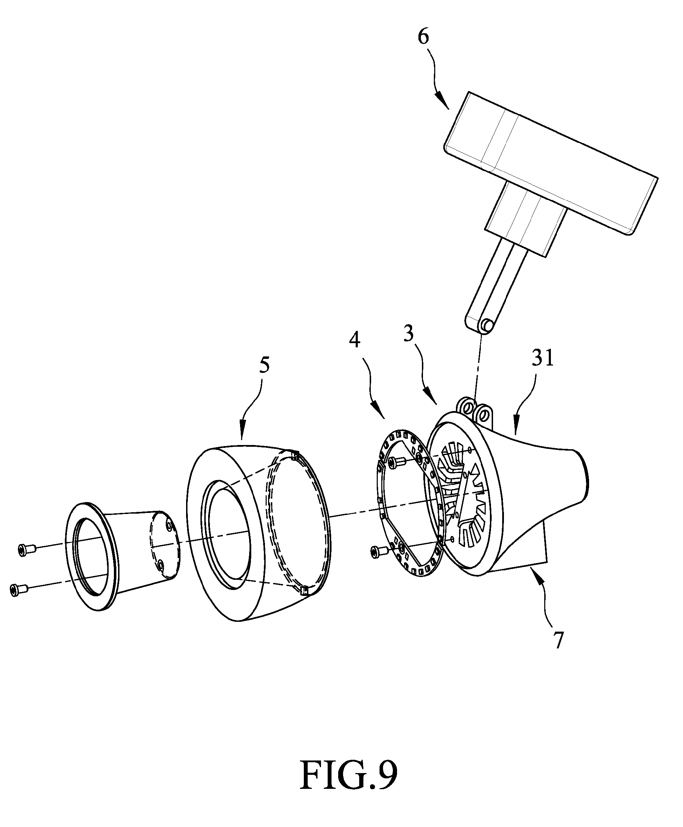

Referring to Figure 9, the second embodiment of the lamp according to the present invention varies from the first embodiment in that the second embodiment further includes a driving unit 7 mounted to the heat-dissipating seat 31 and connected electrically to the light source 4 for driving operation of the light source 4. It should be noted that the driving unit 7 may be contained in the mounting seat 6 so as to simplify the appearance and strengthen the aesthetic appeal of the lamp. The second embodiment has the same advantages of the first embodiment.

## Claims

1. A lamp comprising:
a heat-dissipating unit (3) formed with at least one heat-dissipating channel (311) that has opposite open ends;
a light source (4); and
a light guide unit (5) for guiding light that is emitted from said light source (4), and formed with a vent hole (511) that has opposite open ends in spatial communication with said heat-dissipating channel (311).

2. The lamp as claimed in claim 1, wherein said heat-dissipating unit (3) includes a heat-dissipating seat (31) formed with said heat-dissipating channel (311), said heat-dissipating seat (31) having front and rear end surfaces (312, 313) that are formed respectively with the opposite open ends of said heat-dissipating channel (311).

3. The lamp as claimed in claim 2, wherein said heat-dissipating unit (3) further includes a plurality of spaced-apart heat-dissipating components (32) connected to said heat-dissipating seat (31) and disposed in said heat-dissipating channel (311).

4. The lamp as claimed in claim 2 or 3, wherein said light source (4) includes a circuit board (42) that is coupled to said front end surface (312) of said heat-dissipating seat (31), and a plurality of light emitting members (43) that are connected to said circuit board (42), and optionally said circuit board (42) is annular shaped and defines a through hole (41) therein being in spatial communication with said at least one heat-dissipating channel (311).

5. The lamp as claimed in any one of claims 2 to 4, wherein said light guide unit (5) includes a lens (51) that is formed with said vent hole (511), said lens (51) having a light incident surface (512) that faces said heat-dissipating seat (31), and a light emitting surface (513) that is opposite to and that is larger than said light incident surface (512), said opposite open ends of the vent hole (511) being formed respectively in said light incident surface (512) and said light emitting surface (513), the light which is emitted from said light source (4) entering said lens (51) through the light incident surface (512), and being reflected to exit said lens (51) through said light emitting surface (513).

6. The lamp as claimed in claim 5, wherein:
said light incident surface (513) of said lens (51) is formed with a first engaging portion (515) surrounding said vent hole (511); and
said heat-dissipating seat (31) includes a main body (315) having said front and rear end surfaces (312, 313), and a second engaging portion (314) which is engaged with said first engaging portion (515) of said lens (51).

7. The lamp as claimed in claim 6, wherein said second engaging portion (314) is an annular projection wall projecting from said front end surface (312), and said first engaging portion (515) abuts against the inner side of said annular projection wall to be retained by said annular projection wall.

8. The lamp as claimed in any of claims 5 to 7, wherein said light guide unit (5) further includes an annular fixing member (52) passing into said vent hole (511) of said lens (51) and fixed to said heat-dissipating seat (31) of said heat-dissipating unit (3) so as to position said lens (51).

9. The lamp as claimed in claim 8, wherein said annular fixing member (52) of said light guide unit (5) has a heat-dissipating hole (521) that has opposite open ends and that is in spatial communication with said heat-dissipating channel (311).

10. The lamp as claimed in claim 9, **characterized in that** said annular fixing member (52) further has a rear end section (522) connected to said front end surface (312) of said heat-dissipating seat (31) and formed with one of said open ends of said heat-dissipating hole (521), and a front end section (523) coupled to said light emitting surface (513) of said lens (51) and formed with the other one of said open ends of said heat-dissipating hole (521), and optionally said heat-dissipating hole (521) tapers rearwardly.

11. The lamp as claimed in any of claims 8 to 10, **characterized in that**:
said light emitting surface (513) of said lens (51) is formed with a receiving groove (514); and
said annular fixing member (52) is retained in said receiving groove (514).

12. The lamp as claimed in any one of claims 1 to 11, further **characterized by** a mounting seat (6) adapted for mounting said lamp to a support surface (8).

13. The lamp as claimed in any one of claims 2 to 11, further **characterized by** a driving unit (7) mounted to said heat-dissipating seat (31) and connected electrically to said light source (4) for driving operation of said light source (4).

14. The lamp as claimed in claim 12, further **characterized by** a driving unit (7) mounted to said mounting seat (6) and connected electrically to said light source (4) for driving operation of said light source (4).

15. The lamp as claimed in any one of claims 1 to 14, **characterized in that** said heat-dissipating channel (311) tapers rearwardly.
